# EUROPEAN PATENT APPLICATION

(11) **EP 3 742 679 A1**
(43) Date of publication of application: **25.11.2020**
(21) Application number: 20174179.0
(22) Date of filing: 12.05.2020
(51) Int. Cl.: H04L 12/403

(54) **SPI PROTOCOL FOR BURST READ/WRITE MODE**

(30) Priority: 20.05.2019 US 201916417608
(71) Applicant: NXP USA, Inc., Austin TX 78735 (US)
(72) Inventor: SANGOLLI, Ramesh M, 5656 AE Eindhoven (NL); CHANDRA, Deepika, 5656 AE Eindhoven (NL)
(74) Representative: Hardingham, Christopher Mark

(57) **Abstract**

In a network having a master node and slave nodes connected in a daisy-chain configuration, the master transmits a chip select (CS) signal that selectively enables the slaves to perform network operations. The master controls multiple non-bypassed slaves to operate in a burst mode, where each of the multiple slaves reads or writes multiple sets of data within a single CS strobe. The non-bypassed slaves use the total number of slaves in the network (NUM_SLAVES) to determine when to operate in burst mode. The network supports operations in which the master determines and then serially broadcasts NUM_SLAVES to the slaves. The network also supports bypass-slave operations that bypass individual slaves and single-slave operations. The network can read and/or write data faster than conventional SPI daisy-chain networks.

## Description

### BACKGROUND

The present invention relates generally to a protocol for connecting electronic nodes and, more particularly, to a network of electronic nodes connected in a master-slave daisy-chain configuration and supporting a SPI (serial peripheral interface) communication protocol.

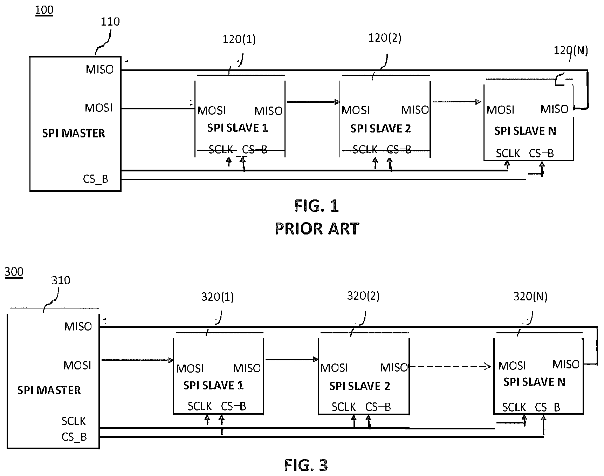

FIG. 1 is a block diagram of a conventional network 100 of nodes comprising a master node 110 and N slave nodes 120(1)-120(*N*) connected in a daisy-chain configuration and supporting an SPI protocol. In such a daisy-chain configuration, the master 110 is (i) the network node immediately upstream of the first slave 120(1) and (ii) the network node immediately downstream of the last slave 120*(N).*

The master 110 and the N slaves 120 each have a master-out, slave-in (MOSI) serial port and a master-in, slave-out (MISO) serial port, where the MOSI port of the master 110 is directly connected to the MOSI port of the first slave 120(1), the MISO port of each of the first (*N*-1) slaves 120(*i*) is directly connected to the MOSI port of the immediate downstream slave 120(*i*+1), and the MISO port of the Nth slave 120(*N*) is directly connected to the MISO port of the master 110.

In addition, the master 110 and the *N* slaves 120 each have a parallel, system clock port SCLK and a parallel, chip select port CS_B, where the master 110 broadcasts a system clock signal SCLK and an active-low chip select signal CS_B, respectively, to those ports of the N slaves 120. Note that, as used herein, a port and its signal may be referred to using the same label. For example, the master 310 transmits the SCLK signal from its SCLK port to the SCLK port of every slave 120.

According to the SPI protocol, when the chip select CS_B is low, at each cycle of the system clock SCLK, one bit of data is serially transmitted from an upstream node to the immediate downstream node (*i.e*., from the master MOSI to the slave 1 MOSI, from the slave *i* MISO to the slave *i*+1 MOSI, and from the slave *N* MISO to the master MISO).

In one possible SPI implementation, the size (SPI_WL) of each serially-transmitted message (*e.g*., command or data) is 16 bits, and each slave 120 has a 16-bit shift register (not shown in FIG. 1) into which the slave 120 receives each incoming bit from its immediate upstream node at each SCLK cycle when CS_B is low and from which the slave 120 transmits each outgoing bit to its immediate downstream node at each SCLK cycle when CS_B is low.

When CS_B goes high, each slave 120 processes the message currently stored in its shift register. That processing might involve executing a read command to retrieve data from a specified memory location within the slave 120 into the slave's shift register or a write command to move data from the slave's shift register into a specified memory location within the slave 120.

When CS_B again goes low, each slave 120 will again resume transmitting data from and receiving data into its shift register one bit per SCLK cycle.

In the network 100, the master 110 needs to be pre-programmed with *a priori* knowledge of the total number of slaves 120 in the network 100 as well as the location of each slave 120 in the network 100. On the other hand, each slave 120 typically never needs to know or have knowledge of the total number of slaves 120 in the network 100.

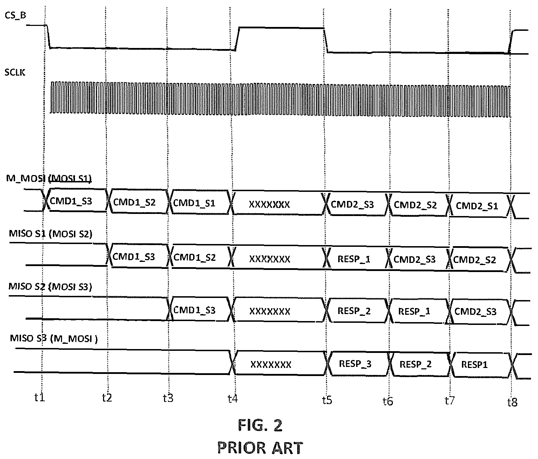

FIG. 2 is a timing diagram for an implementation of a read operation in the SPI network 100 having three (*N*=3) slaves 120. The timeline labeled "M_MOSI (MOSI S1)" represents the data transmitted from the MOSI port of the master 110 to the MOSI port of the first slave 120(1), the timeline labeled "MISO S1 (MOSI S2)" represents the data transmitted from the MISO port of the first slave 120(1) to the MOSI port of the second slave 120(2), the timeline labeled "MISO S2 (MOSI S3)" represents the data transmitted from the MISO port of the second slave 120(2) to the MOSI port of the third slave 120(3), and the timeline labeled "MISO S3 (M_MOSI)" represents the data transmitted from the MISO port of the third slave 120(3) to the MOSI port of the master 110.

At time t1, the master 110 drives CS_B low and each node in the network 100 starts to transmit the contents of its shift register to the immediate downstream node. Thus, at time t1, the master 110 starts to transmit to the first slave 120(1) a first read command CMD1_S3 intended for the third slave 120(3).

At time t2 (*i.e.*, 16 SCLK cycles after t1), CMD1_S3 will be stored in the shift register of the first slave 120(1). At time t2, the master 110 starts to transmit to the first slave 120(1) a first read command CMD1_S2 intended for the second slave 120(2), and the first slave 120(1) starts to transmit CMD1_S3 to the second slave 120(2).

At time t3 (*i.e*., 16 SCLK cycles after t2), CMD1_S3 will be stored in the shift register of the second slave 120(2), and CMD1_S2 will be stored in the shift register of the first slave 120(1). At time t3, the master 110 starts to transmit to the first slave 120(1) a first read command CMD1_S1 intended for the first slave 120(1), the second slave 120(2) starts to transmit CMD1_S3 to the third slave 120(3), and the first slave 120(1) starts to transmit CMD1_S2 to the second slave 120(2).

At time t4 (*i.e*., 16 SCLK cycles after t3), CMD1_S3 will be stored in the shift register of the third slave 120(3), CMD1_S2 will be stored in the shift register of the second slave 120(2), and CMD1_S1 will be stored in the shift register of the first slave 120(1). At time t4, the master 110 drives CS_B high causing each slave 120 to process the message stored in its shift register, where, in this example, each message is a read command for a (potentially different) specified memory location within the corresponding slave 120. As such, during the period from time t4 to time t5, each slave 120(*i*) loads its shift register with the requested data (*i.e*., RESP_*i*). The minimum duration between times t4 and t5 depends on the specific design. It can be as short as one clock cycle, but is usually longer.

At time t5, the master 110 again drives CS_B low, thereby resuming data transfer operations. In particular, at time t5, the master 110 starts to transmit to the first slave 120(1) a second command CMD2_S3 intended for the third slave 120(3), the first slave 120(1) starts to transmit its response RESP_1 to the second slave 120(2), the second slave 120(2) starts to transmit its response RESP_2 to the third slave 120(3), and the third slave 120(3) starts to transmit its response RESP_3 to the master 110.

At time t6 (*i.e*., 16 SCLK cycles after t5), the master 110 starts to transmit to the first slave 120(1) a second command CMD2_S2 intended for the second slave 120(2), the first slave 120(1) starts to transmit CMD_S3 to the second slave 120(2), the second slave 120(2) starts to transmit RESP_1 to the third slave 120(3), and the third slave 120(3) starts to transmit RESP_2 to the master 110.

At time t7 (*i.e*., 16 SCLK cycles after t6), the master 110 starts to transmit to the first slave 120(1) a second command CMD2_S1 intended for the first slave 120(1), the first slave 120(1) starts to transmit CMD_S2 to the second slave 120(2), the second slave 120(2) starts to transmit CMD_S3 to the third slave 120(3), and the third slave 120(3) starts to transmit RESP_1 to the master 110.

At time t8 (*i.e*., 16 SCLK cycles after t7), all three responses RESP_1, RESP_2, and RESP_3 will have been received by the master 110, CMD2_S3 will be stored in the shift register of the third slave 120(3), CMD2_S2 will be stored in the shift register of the second slave 120(2), and CMD2_S1 will be stored in the shift register of the first slave 120(1). At time t8, the master 110 again drives CS_B high causing each slave 120 to process the message stored in its shift register, and so on.

Note that, during the CS_B strobe between times t5 and t8, only one set of data is read from each slave 120. Furthermore, the transmission of the read commands to the slaves 320 between times t1 and t4 and the transmission of the results of those read commands between times t5 and t8 occur during different CS_B strobes.

### BRIEF DESCRIPTION OF THE DRAWINGS

Embodiments of the present invention are illustrated by way of example and are not limited by the accompanying figures, in which like references indicate similar elements. Elements in the figures are illustrated for simplicity and clarity and have not necessarily been drawn to scale. For example, the thicknesses of layers and regions may be exaggerated for clarity.
FIG. 1 is a schematic block diagram of a conventional SPI daisy-chain network;
FIG. 2 is a timing diagram of a read operation for an implementation of the SPI network of FIG. 1 having three slaves;
FIG. 3 is a schematic block diagram of an SPI daisy-chain network according to one embodiment of the present invention;
FIG. 4 is a simplified schematic block diagram of the slaves in the network of FIG. 3;
FIG. 5 is a representation of the format of a 16-bit command in the network of FIG. 3;
FIG. 6 is a table identifying a number of different commands supported by the network of FIG. 3;
FIG. 7 is a timing diagram for an implementation of an address-assignment operation in the network of FIG. 3 having three slaves;
FIG. 8 is a timing diagram for an implementation of a size-broadcast operation in the network of FIG. 3 having three slaves;
FIG. 9 is a timing diagram for an implementation of a burst-read operation in the network of FIG. 3 having three slaves;
FIG. 10 is a timing diagram for an implementation of a burst-write operation in the network of FIG. 3 having three slaves;
FIG. 11 is a timing diagram for an implementation of a hybrid burst-read/write operation in the network of FIG. 3 having three slaves; and
FIG. 12 is a timing diagram for an implementation of a bypass-slave operation in the network of FIG. 3 having three slaves.

### DETAILED DESCRIPTION

Detailed illustrative embodiments of the present invention are disclosed herein. However, specific structural and functional details disclosed herein are merely representative for purposes of describing example embodiments of the present invention. Embodiments of the present invention may be embodied in many alternative forms and should not be construed as limited to only the embodiments set forth herein. Further, the terminology used herein is for the purpose of describing particular embodiments only and is not intended to be limiting of example embodiments of the invention.

As used herein, the singular forms "a", "an", and "the", are intended to include the plural forms as well, unless the context clearly indicates otherwise. It further will be understood that the terms "comprises", "comprising", "has", "having", "includes", or "including" specify the presence of stated features, steps, or components, but do not preclude the presence or addition of one or more other features, steps, or components. It also should be noted that, in some alternative implementations, the functions/acts noted might occur out of the order noted in the figures. For example, two figures shown in succession may in fact be executed substantially concurrently or may sometimes be executed in the reverse order, depending upon the functionality/acts involved. The term "or" is to be interpreted as inclusive unless indicated otherwise.

According to certain embodiments of the present invention, the master and slave nodes of a daisy-chain network support an SPI protocol that enables data to be shifted into and out of the slaves more efficiently (*e.g*., quicker) than in the conventional master-slave, daisy-chain, SPI network 100 of FIG. 1.

One embodiment of the invention is a network or a node for the network comprising a master and a plurality of slaves connected in a daisy-chain configuration, wherein the node is the master or one of the slaves. The master (i) transmits a chip select (CS) signal that selectively enables the slaves to perform network operations and (ii) controls multiple slaves to operate in a burst mode in which each of the multiple slaves reads or writes multiple sets of data within a single CS strobe.

FIG. 3 is a block diagram of an SPI network 300 of nodes comprising a master 310 and N slaves 320(1)-320(*N*) connected in a daisy-chain configuration according to one embodiment of the invention. Like the master 110 and the slaves 120 of FIG. 1, the master 310 and the slaves 320 of FIG. 3 each have analogous SCLK, CS_B, MOSI, and MISO ports.

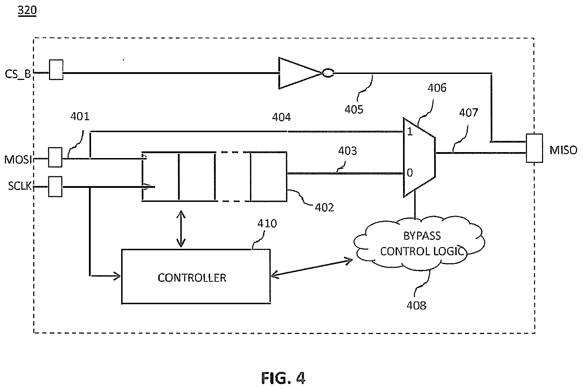

FIG. 4 is a simplified block diagram of each slave 320 of FIG. 3. Like the slaves 120 of FIG. 1, the slave 320 has input ports MOSI, SCLK, and CS_B, a 16-bit shift register (SR) 402, and an output port MISO. In addition, the slave 320 has an inverter 404, a multiplexer (mux) 406, bypass control logic 408, and a controller 410.

Although not explicitly represented in the figures, the master 310 has two shift registers: an outgoing shift register connected to its MOSI output port for transmitting messages to the first slave 320(1) and an incoming shift register connected to its MISO input port for receiving messages from the Nth slave 320(*N*).

The incoming data signal 401 received at the MOSI port from the immediate upstream node in the network 300 of FIG. 3 is applied to both (i) the logic 1 input port of the mux 406 and (ii) the data input port of the shift register 402. The shift register 402 also receives the SCLK clock signal which is used to clock (i) the incoming data signal 401 into the shift register 402 one bit per cycle and (ii) the SR data signal 403 from the shift register 402 to the logic 0 input port of the mux 406 one bit per cycle.

When the mux control signal 409 from the bypass control logic 408 is high (*i.e*., logic 1), the mux 406 provides the data at its logic 1 input port as the output data signal 407. Otherwise, when the mux control signal 409 is low (*i.e*., logic 0), the mux 406 provides the data at its logic 0 input port as the output data signal 407. As described further below, when a slave 320 is configured in default, non-bypass mode, the mux control signal 409 is low, and the mux 406 provides the SR data signal 403 as the output data signal 407. When a slave 320 is configured in bypass mode, the mux control signal 409 is high, and the mux 406 provides the incoming data signal 401 as the output data signal 407.

The inverter 404 inverts the CS_B signal to form an output enable signal 405. Although not shown in FIG. 4, the MISO port has an AND gate (or the logical equivalent of an AND gate) that receives (i) the output enable signal 405 from the inverter 404 and (ii) the output data signal 407 from the mux 406. When CS_B is high, the output enable signal 405 is low and the AND gate in the MISO port blocks the output data signal 407 from being transmitted from the MISO port to the immediate downstream node in the network 300 of FIG. 3. On the other hand, when CS_B is low, the output enable signal 405 is high and the AND gate in the MISO port allows the output data signal 407 to be transmitted from the MISO port to the immediate downstream node.

When a slave 320 is configured in the default, non-bypass mode and CS_B is low, the slave 320 will receive the incoming data signal 401 into its shift register 402; interpret the contents of its shift register 402; if those contents correspond to a command to be executed, then execute the command; and transmit the (possibly updated) contents of its shift register 402 to the immediate downstream node in the network 300. On the other hand, when a slave 320 is configured in the bypass mode and CS_B is low, the slave 320 will immediately transmit the incoming data signal 401 to the immediate downstream node in the network 300 such that, the slave 320 is effectively transparent to the network operation being performed at that time. Note that, while the slave 320 is in bypass mode, the slave 320 will still receive the incoming data signal 401 into its shift register 402; interpret the contents of its shift register 402; and if those contents correspond to a command to be executed, then execute the command. As explained below, this off-line processing enables the master 310 to instruct a bypassed slave 320 to re-configure itself back into the default, non-bypassed mode without having to perform a hard reset of the entire network 300. Unless explicitly stated otherwise, each slave 320 referred to below is assumed to be in non-bypass mode.

In some alternative embodiments, the only way to re-configure a bypassed slave 320 back to the non-bypassed mode is with a hard reset. In such embodiments, bypassed slaves 320 do not need to be able to receive, interpret, or execute commands in their shift registers 402.

According to certain embodiments of the invention, the master 310 and the slaves 320 of FIG. 3 have no *a priori* knowledge of the total number of slaves in the network 300, and each slave 320 has no *a priori* knowledge of its location within the network 300. The master 310 and the slaves 320, however, support particular network operations to determine both. In particular, the master 310 and the slaves 320 support an address-assignment operation, during which each slave 320 determines its location (i.e., its network address) with the network 300, and the master 310 determines the total number of slaves in the network 300. In addition, the master 310 and the slaves 320 support a size-broadcast operation, during which the master 310 (serially) broadcasts to the slaves 320 the total number of slaves in the network 300.

After those two operations and with the resulting information, the master 310 and the slaves 320 support read and write operations that can, respectively, transfer data out of and into the slaves 320 more efficiently than in the conventional master-slave, daisy-chain, SPI network 100 of FIG. 1.

As described further below, the master 310 and the slaves 320 also support a bypass-slave operation, in which the master 310 commands a particular slave 320 to configure itself into bypass mode, which effectively makes that slave 320 transparent for subsequent read and/or write operations. In addition, the master 310 and the slaves 320 support a soft-slave-reset operation, in which the master 310 commands a particular slave 320 to re-configure itself back into the default, non-bypass mode in order to terminate bypass-slave operations for that particular slave 320.

The master 310 and the slaves 320 also support a single-slave operation, in which the master 310 commands all of the slaves 320 except for a single, identified slave 320 to configure themselves into the bypass mode, which enables the master 310 to perform subsequent read and/or write operations with only that single, identified slave 320. In addition, the master 310 and the slaves 320 support a soft-network-reset operation, in which all of the slaves 320 configure themselves into the default, non-bypass mode, in order to terminate single-slave operations.

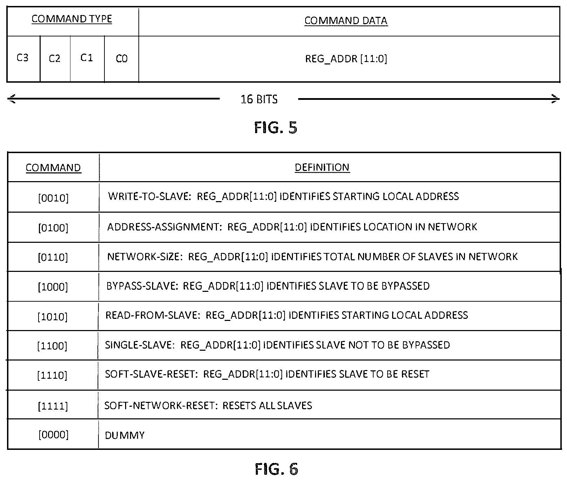

FIG. 5 is a representation of the format of each 16-bit command REG_ADDR[15:0] in the network 300 of FIG. 3. As described below with respect to FIG. 6, the four bits REG_ADDR[15:12] (labeled C3-C0 in FIG. 4) identify the type of command, and the next 12 bits REG_ADDR[11:0] contain data associated with that command. Note that, for data messages, such as those used to convey read or write data, all 16 bits may be used for data.

FIG. 6 is a table identifying a number of different commands supported by the network 300 of FIG. 3. Note that FIG. 6 is just one possible way of representing the different commands supported by the network 300.

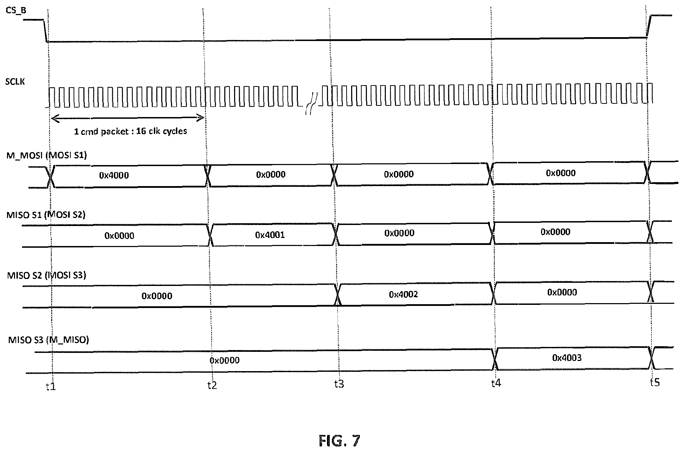

As described further below in relation to FIG. 7, the master 310 uses the address-assignment command [C3:C0]=[0100] to perform an address-assignment operation, during which each slave 320 determines the network address of its location within the network, where the first slave 320(1) has a network address of 1, the second slave 320(2) has a network address of 2, and so on, and the master 310 determines the total number of slaves 320 in the network 300.

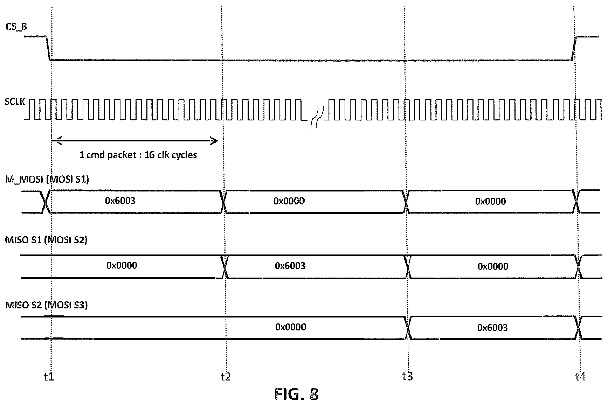

As described further below in relation to FIG. 8, the master 310 uses the network-size command [0110] to perform a size-broadcast operation, during which each slave 320 is informed of the total number of slaves in the network 300.

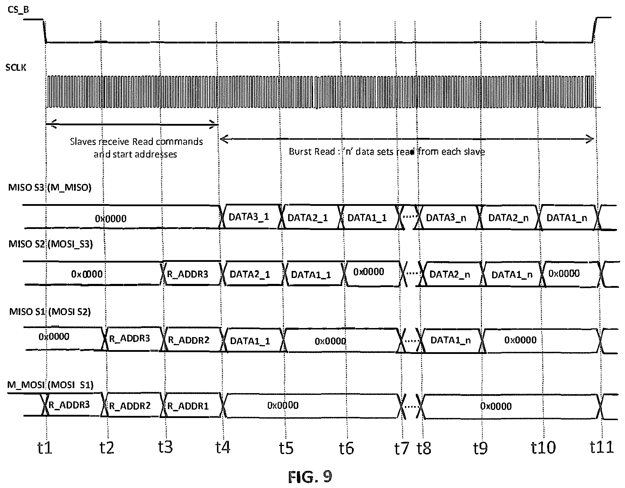

As described further below in relation to FIG. 9, the master 310 uses the read-from-slave command [1010] to instruct a slave 320 to retrieve and transmit one or more sets of data from one or more contiguous locations within the slave's local memory.

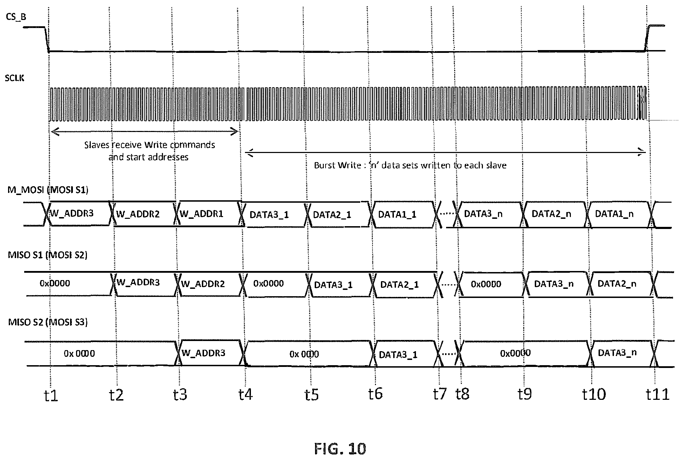

As described further below in relation to FIG. 10, the master 310 uses the write-to-slave command [0010] to instruct a slave 320 to write one or more sets of data into one or more contiguous locations within the slave's local memory.

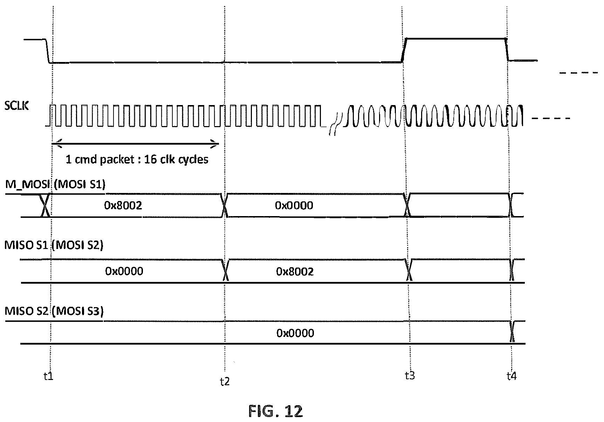

As described further below in relation to FIG. 12, the master 310 uses the bypass-slave command [1000] to instruct a slave 320 to configure itself into the bypass mode.

The master 310 uses the soft-slave-reset command [1110] to instruct a slave 320 that is configured in bypass mode to re-configure itself back into the default, non-bypass mode.

The master 310 uses the single-slave command [1100] to instruct all but one slave 320 to configure themselves into the bypass mode. The single-slave command is used to configure the network 300 for subsequent single-slave operations in which the master 310 reads and writes data from and to only that one slave 320 in the network 300.

The master 310 uses the soft-network-reset command [1111] to instruct each slave 320 to configure itself into the default, non-bypass mode. The soft-network-reset command is used to reset the network 300 when single-slave operations are complete without having to perform a hard reset of the network 300.

The master 310 uses the dummy command [0000] to instruct a slave 320 to do nothing.

Values of [C3:C0] not shown in FIG. 6 may be used for other existing commands supported by the network 300 or reserved for commands to be defined in the future.

The master 310 and the slaves 320 each maintain a local counter of the total number of SCLK cycles since CS_B was last driven low by the master 310. When the master 310 drives CS_B high, the master 310 and the slaves 320 all reset their local SCLK-cycle counters. The master 310 uses its counter to schedule operations in the network 300, and the slaves 320 use their counters to determine when to interpret the contents of their shift registers 402 and, if appropriate, when to perform operations based on the contents of their shift registers 402.

In some implementations, the local counters in the master 310 and the slaves 320 can be modulo P counters, where P is the product of the packet length and the total number of (non-bypassed) slaves 320 in the network 300. For example, for a network 300 having three slaves 320 and a packet length of 16, the module P counters would repeatedly count from 1 to 48.

In particular, each slave 320 interprets the contents of its shift register 402 at every 16-SCLK-cycle interval since CS_B was driven low. As described further below, some command types are to be executed by a slave 320 as soon as the slave 320 interprets that its SR contents correspond to one of those command types, while other command types are to be executed by a slave 320 only at other intervals.

For example, the address-assignment, network-size, bypass-slave, single-slave, soft-slave-reset, and soft-network-reset commands are to be executed as soon as any slave 320 interprets that its SR contents correspond to one of those command types.

On the other hand, the write-to-slave and read-from-slave commands are to be executed by a slave 320 only when its SCLK-cycle counter equals the product of 16 and the total number of slaves in the network 300. Thus, in the example network 300 described below having three slaves 320, each slave 320 will execute a write-to-slave command or a read-from-slave command in its shift register 402 only 3x16 or 48 SCLK cycles after CS_B was driven low.

The master 310 does not mix data transmission commands (i.e., write-to-slave and read-from-slave) with any other commands in the same CS_B strobe, thus ensuring that the slaves 320 can distinguish data messages from command messages.

Although the invention is described in the context of a master-slave, daisy-chain network 300 having 16-bit messages with the slaves 320 having 16-bit shift registers 402 and the particular set of commands shown in FIG. 6, those skilled in the art will understand that, in alternative embodiments, the messages and shift registers may have other suitable sizes and/or different values and/or different numbers of bits may be used for the same or a different set of commands.

In preferred scenarios, the first network operation that is performed in the network 300 is an address-assignment operation so that each slave 320 can determine its location within the network 320, and the master 310 can determine the total number of slaves in the network 300. Preferably, the second network operation is a size-broadcast operation so that each slave 320 will be informed of the total number of slaves in the network 300. At that point, other network operations, such as read and write operations, can be performed.

As used herein, a single network operation corresponds to the processing performed by the master 310 and the slaves 320 during one CS_B strobe (*i.e*., from the time that the master 310 drives CS_B low until the time that the master 310 next drives CS_B high). Unlike the slaves 120 of the conventional SPI network 100 of FIG. 1, the slaves 320 of the SPI network 300 of FIG. 3 do not process the contents of their shift registers 402 when CS_B is driven high. Rather, all of the processing by the slaves 320 associated with a network operation occurs while CS_B is low. The master 310 of FIG. 3 drives CS_B high to terminate a network operation.

### Example Address-Assignment Operation

FIG. 7 is a timing diagram for an implementation of an address-assignment operation in the network 300 of FIG. 3 having *N*=3 slaves 320. During the address-assignment operation, each slave 320 receives the network address of the immediate upstream node, increments that address, stores the incremented address as its network address, and transmits its network address to the immediate downstream node. The master 310 starts the operation by transmitting the network address value 0 to the first slave 320(1). When the third and last slave 320(3) transmits its network address value (*i.e*., 3) to the master 310, the master 310 saves that network address value as the total number (NUM_SLAVES) of slaves 320 in the network 300.

The timelines shown in FIG. 7 are analogous to the similarly labeled timelines shown in FIG. 2. The same is true for all of the other timing diagrams described below.

At time t1, the master 310 drives CS_B low and each node in the network 300 starts to transmit the contents of its shift register to the immediate downstream node. Thus, at time t1, the master 310 starts to transmit the 16-bit (hexadecimal) message 0x4000 to the first slave 320(1), while each slave 320 transmits the default dummy message 0x0000 to the immediate downstream node.

At time t2 (*i.e*., 16 SCLK cycles after time t1), the message 0x4000 is stored in the shift register of the first slave 320(1), and the first slave 320(1) interprets the message 0x4000. In particular, the first slave 320(1) interprets the message value 0x4 as corresponding to the address-assignment command (*i.e*., binary [0100] in FIG. 6). As such, the first slave 320(1) executes the address-assignment command by (i) incrementing the 12-bit command data value 0x000 to be 0x001 and (ii) storing the value 0x001 as its network address. Note that, at time t2, the second and third slaves 320(2) and 320(3) will interpret the contents of their shift registers as well, but, since their shift registers will contain the dummy command 0x0000, those slaves 320 will do nothing. At time t2, the first slave 320(1) starts to transmit its SR value 0x4001 to the second slave 320(2). Note that, in this implementation, at time t2, the master 310 starts to transmit the message 0x0000. In an alternative implementation, the master 310 could retransmit the message 0x4000 to achieve the same net effect on the network 300.

At time t3 (i.e., 16 SCLK cycles after time t2), the message 0x4001 is stored in the shift register of the second slave 320(2), and the second slave 320(2) interprets the message 0x4001. In particular, the second slave 320(2) interprets the message value 0x4 as corresponding to the address-assignment command. As such, the second slave 320(2) executes the address-assignment command by (i) incrementing the 12-bit message data value 0x001 to be 0x002 and (ii) storing the value 0x002 as its network address. Note that, at time t3, the first and third slaves 320(1) and 320(3) will interpret the contents of their shift registers as well, but, since those shift registers will contain the dummy command 0x0000, those slaves 320 will do nothing. At time t3, the second slave 320(2) starts to transmit its SR value 0x4002 to the third slave 320(3).

At time t4 (i.e., 16 SCLK cycles after time t3), the message 0x4002 is stored in the shift register of the third slave 320(3), and the third slave 320(3) interprets the message 0x4002. In particular, the third slave 320(3) interprets the command value 0x4 as corresponding to the address-assignment command. As such, the third slave 320(3) executes the address-assignment command by (i) incrementing the 12-bit message data value 0x002 to be 0x003 and (ii) storing the value 0x003 as its network address. At time t4, the third slave 320(3) starts to transmit its SR value 0x4003 to the master 310.

At time t5 (i.e., 16 SCLK cycles after time t4), the master 310 will have received the message 0x4003, which the master 310 will interpret 0x003 as indicating the total number of slaves 320 in the network 300 (i.e., NUM_SLAVES=3). As such, at time t5, the master 310 drives CS_B high to terminate the address-assignment operation.

### Example Size-Broadcast Operation

FIG. 8 is a timing diagram for an implementation of a size-broadcast operation in the network 300 of FIG. 3 having *N*=3 slaves 320. During the size-broadcast operation, the master 310 (serially) broadcasts the total number (in this example, NUM_SLAVES=3) of slaves 320 in the network 300. Each slave 320 receives NUM_SLAVES from the immediate upstream node, stores the value of NUM_SLAVES in its local parameter for the total number of slaves, and transmits NUM_SLAVES to the immediate downstream node. Based on its knowledge of the total number of slaves 320 in the network 300, the master 310 will know when the network-size command reaches the last slave 320(3) in the network 300.

At time t1, the master 310 drives CS_B low and starts to transmit the 16-bit (hexadecimal) message 0x6003 to the first slave 320(1).

At time t2 (*i.e*., 16 SCLK cycles after time t1), the message 0x6003 is stored in the shift register of the first slave 320(1), and the first slave 320(1) interprets the message 0x6003. In particular, the first slave 320(1) interprets the message value 0x6 as corresponding to the network-size command (*i.e*., binary [0110] in FIG. 6). As such, the first slave 320(1) executes the network-size command by storing the 12-bit command data value 0x003 as its local value for the total number of slaves in the network 300. At time t2, the first slave 320(1) starts to transmit its SR value 0x6003 to the second slave 320(2).

At time t3 (*i.e*., 16 SCLK cycles after time t2), the message 0x6003 is stored in the shift register of the second slave 320(2), and the second slave 320(2) processes the message 0x6003 in the same way as the first slave 320(1). At time t3, the second slave 320(2) starts to transmit its SR value 0x6003 to the third slave 320(3).

At time t4 (*i.e.*, 16 SCLK cycles after time t3), the message 0x6003 is stored in the shift register of the third slave 320(3), and the third slave 320(3) processes the message 0x6003 in the same way as the first and second slaves 320(1) and 320(2). At time t4, the master 310 knows that the message 0x6003 has reached the third slave 320(3) and that the size-broadcast operation is complete. As such, at time t4, the master 310 drives CS_B high.

After the size-broadcast operation of FIG. 8 has been performed, each slave 320 knows the total number of slaves in the network 300. With that information and by counting the number of SCLK cycles since CS_B was driven low, each slave 320 can determine when it is allowed to execute a read-from-slave command or a write-to-slave command. For example, if the network 300 has three slaves 320, each slave 320 knows that it is allowed to execute a read-from-slave command or a write-to-slave command that is in its shift register (3x16) or 48 SCLK cycles after SC_B is driven low.

As used herein, the term "burst operation" refers to a network operation in which two or more sets of data are read from and/or written to at least one slave 320 in a single CS_B strobe. As described below, the network 300 supports burst-read operations in which multiple sets of data are read from non-bypassed slaves in a single CS_B strobe, burst-write operations in which multiple sets of data are written to non-bypassed slaves in a single CS_B strobe, and hybrid burst-read/write operations in which multiple sets of data read from one or more non-bypassed slaves and multiple sets of data are written to the remaining one or more non-bypassed slaves in a single CS_B strobe. During such burst operations, the non-bypassed slaves are said to operate in corresponding burst modes.

### Example Burst-Read Operation

FIG. 9 is a timing diagram for an implementation of a burst-read operation in the network 300 of FIG. 3 having *N*=3 slaves 320. During the burst-read operation, the master 310 transmits read-from-slave commands to instruct each slave 320 to start reading data from a specified local memory location and transmit that data to the immediate downstream node in the network 300.

Referring to FIG. 9, at time t1, the master 310 drives CS_B low and starts to transmit the 16-bit read-from-slave command R_ADDR3 to the first slave 320(1), where the first 4 bits of R_ADDR3 are [1010], indicating that R_ADDR3 is a read-from-slave command as in FIG. 6, and the last 12 bits of R_ADDR3 identify a particular memory location (ADDR3) within the third slave 320(3).

At time t2 (*i.e*., 16 SCLK cycles after time t1), the first slave 320(1) interprets the contents of its shift register (*i.e.*, R_ADDR3) as being a read-from-slave command, but, because 48 SCLK cycles have not yet been counted since CS_B was driven low, the first slave 320(1) does not execute that read-from-slave command. Instead, at time t2, the first slave 320(1) starts to transmit R_ADDR3 to the second slave 320(2), and the master 310 starts to transmit the 16-bit read-from-slave command R_ADDR2 to the first slave 320(1), where the first 4 bits of R_ADDR2 are also [1010] and the last 12 bits of R_ADDR2 identify a particular memory location (ADDR2) within the second slave 320(2).

At time t3 (*i.e*., 16 SCLK cycles after time t2), the first slave 320(1) interprets the contents of its shift register (*i.e*., R_ADDR2) as being a read-from-slave command, and the second slave 320(2) interprets the contents of its shift register (*i.e*., R_ADDR3) as also being a read-from-slave command, but, because 48 SCLK cycles have not yet been counted since CS_B was driven low, the first and second slaves 320(1) and 320(2) do not execute those read-from-slave commands. Instead, at time t3, the second slave 320(2) starts to transmit R_ADDR3 to the third slave 320(3), the first slave 320(1) starts to transmit R_ADDR2 to the second slave 320(2), and the master 310 starts to transmit the 16-bit read-from-slave command R_ADDR1 to the first slave 320(1), where the first 4 bits of R_ADDR1 are also [1010] and the last 12 bits of R_ADDR1 identify a particular memory location (ADDR1) within the first slave 320(1).

At time t4 (*i.e.*, 16 SCLK cycles after time t3), the shift register of the first slave 320(1) will contain R_ADDR1, the shift register of the second slave 320(2) will contain R_ADDR2, and the shift register of the third slave 320(3) will contain R_ADDR3. Also, at time t4, each slave 320 will determine that 48 SCLK cycles have been counted since CS_B was driven low. As such, each slave 320 will interpret the message stored in its shift register, determine that the message is a read-from-slave command, and execute that command. Thus, at time t4, the first slave 320(1) will retrieve 16 bits of data (DATA1_1) from its memory location ADDR1 and store that data in its shift register, the second slave 320(2) will retrieve 16 bits of data (DATA2_1) from its memory location ADDR2 and store that data in its shift register, and the third slave 320(3) will retrieve 16 bits of data (DATA3_1) from its memory location and store that data in its shift register. Although not explicitly shown in FIG. 9, the response packets from the slaves 320 may contain, in addition to the data from the addressed memory location, information such as status, error checking codes, slave network address, echo of the command from master 310, etc.

At time t4, each slave 320 will start to transmit its SR contents to the immediate downstream node. Thus, the first slave 320(1) will start to transmit DATA1_1 to the second slave 320(2), the second slave 320(2) will start to transmit DATA2_1 to the third slave 320(3), and the third slave 320(3) will start to transmit DATA3_1 to the master 310.

At time t5 (*i.e*., 16 SCLK cycles after time t4), each slave 320 will continue to transmit its SR contents to the immediate downstream node. Thus, the second slave 320(2) will start to transmit DATA1_1 to the third slave 320(3), and the third slave 320(3) will start to transmit DATA2_1 to the master 310.

At time t6 (*i.e*., 16 SCLK cycles after time t5), the third slave 320(3) will start to transmit DATA1_1 to the master 310.

By time t7 (*i.e*., 16 SCLK cycles after time t6), the first set of burst data (DATA1_1, DATA2_1, DATA3_1) will have been received by the master 310. Furthermore, since the slaves 320 know the total number of slaves in the network 300, each slave 320 will know that the first set of burst data has been received by the master 310 at time t7 (*i.e.*, 48 SCLK cycles after time t4, the time at which the slaves 320 started transmitting the current data set).

As shown in FIG. 9, starting at time t4, the master 310 starts transmitting dummy commands 0x0000 indicating to the slaves 320 that the burst-read mode is to be continued. As such, although not explicitly shown in FIG. 9, starting at time t7, the processing of times t4 to t7 is repeated for the next memory locations within each slave. Thus, at time t7, each slave 320 retrieves another 16-bits of data into its shift register. In particular, the first slave 320(1) increments its memory location value ADDR1 and retrieves data DATA1_2 from that next memory location, the second slave 320(2) increments its memory location value ADDR2 and retrieves data DATA2_2 from that next memory location, and the third slave 320(3) increments its memory location value ADDR3 and retrieves data DATA3_2 from that next memory location. At time t7, all three slaves 320 start to transmit their SR contents to the immediate downstream node.

This processing continues as long as the master 310 keeps CS_B low and continues to transmit dummy commands 0x0000.

FIG. 9 represents the analogous processing performed by the slaves 320 for the last set of read data (DATA1_n, DATA2_n, DATA3_n) from time t8 to time t11. At time t11, based on its local SCLK counter, the master 310 determines that it has received the last data message DATA1_n from the first slave 320(1) and drives CS_B high to terminate the burst-read operation.

Note that, during the single CS_B strobe of FIG. 9, from time t1 to time t4, the master 310 transmitted read-from-slave commands to all of the slaves 320, and, from time t4 to time t11, each slave 320 transmitted multiple sets of data from contiguous local memory locations to the master 310. Thus, multiple sets of data were read from the slaves 320 during a single burst-read network operation.

### Example Burst-Write Operation

FIG. 10 is a timing diagram for an implementation of a burst-write operation in the network 300 of FIG. 3 having *N*=3 slaves 320. During the burst-write operation, the master 310 transmits write-to-slave commands to instruct each slave 320 to store subsequently transmitted data into specified memory locations within the slave 320.

Since the network 300 has three slaves 320, each slave 320 knows that it is allowed to execute a write-to-slave command in its shift register (3x16) or 48 SCLK cycles after CS_B is driven low. In that case, each slave 320 also knows that its shift register will contain data to be stored in its local memory after (6x16) or 96 SCLK cycles, and potentially again after (9x16) or 144 SCLK cycles, and so on, until the master 310 terminates the burst-write operation by driving CS_B high.

Referring to FIG. 10, at time t1, the master 310 drives CS_B low and starts to transmit the 16-bit write-to-slave command W_ADDR3 to the first slave 320(1), where the first 4 bits of W_ADDR3 are [0010], indicating that W_ADDR3 is a read-from-slave command as in FIG. 6, and the last 12 bits of W_ADDR3 identify a particular memory location (ADDR3) within the third slave 320(3).

At time t2 (*i.e*., 16 SCLK cycles after time t1), the first slave 320(1) interprets the contents of its shift register (*i.e*., W_ADDR3) as being a write-to-slave command, but, because 48 SCLK cycles have not yet been counted since CS_B was driven low, the first slave 320(1) does not execute that write-to-slave command. Instead, at time t2, the first slave 320(1) starts to transmit W_ADDR3 to the second slave 320(2), and the master 310 starts to transmit the 16-bit write-to-slave command W_ADDR2 to the first slave 320(1), where the first 4 bits of W_ADDR2 are also [0010] and the last 12 bits of W_ADDR2 identify a particular memory location (ADDR2) within the second slave 320(2).

At time t3 (*i.e*., 16 SCLK cycles after time t2), the first slave 320(1) interprets the contents of its shift register (*i.e*., W_ADDR2) as being a write-to-slave command, and the second slave 320(2) interprets the contents of its shift register (*i.e*., W_ADDR3) as also being a write-to-slave command, but, because 48 SCLK cycles have not yet been counted since CS_B was driven low, the first and second slaves 320(1) and 320(2) do not execute those write-to-slave commands. Instead, at time t3, the second slave 320(2) starts to transmit W_ADDR3 to the third slave 320(3), the first slave 320(1) starts to transmit W_ADDR2 to the second slave 320(2), and the master 310 starts to transmit the 16-bit write-to-slave command W_ADDR1 to the first slave 320(1), where the first 4 bits of R_ADDR1 are also [0010] and the last 12 bits of W_ADDR1 identify a particular memory location (ADDR1) within the first slave 320(1).

At time t4 (*i.e*., 16 SCLK cycles after time t3), the shift register of the first slave 320(1) will contain W_ADDR1, the shift register of the second slave 320(2) will contain W_ADDR2, and the shift register of the third slave 320(3) will contain W_ADDR3. Also, at time t4, each slave 320 will determine that 48 SCLK cycles have been counted since CS_B was driven low. As such, each slave 320 will interpret the message stored in its shift register, determine that the message is a write-to-slave command, and execute that command. Thus, the first slave 320(1) will set its local memory pointer to the value ADDR1, the second slave 320(2) will set its local memory pointer to the value ADDR2, and the third slave 320(3) will set its local memory pointer to the value ADDR3. Although not explicitly shown in FIG. 10, the slaves 320 may transmit back response packets containing information such as status, error checking codes, slave network address, echo of the command from the master 310, etc.

At time t4, the master 310 will start to transmit DATA3_1 to the first slave 320(1).

At time t5 (*i.e*., 16 SCLK cycles after time t4), the master 310 will start to transmit DATA2_1 to the first slave 320(1), and the first slave 320(1) will start to transmit DATA3_1 to the second slave.

At time t6 (*i.e*., 16 SCLK cycles after time t5), the master 310 will start to transmit DATA1_1 to the first slave 320(1), the first slave 320(1) will start to transmit DATA2_1 to the second slave 320(2), and the second slave 320(2) will start to transmit DATA3_1 to the third slave 320(3).

At time t7 (*i.e*., 16 SCLK cycles after time t6), the shift register of the first slave 320(1) will contain DATA1_1, the shift register of the second slave 320(2) will contain DATA2_1, and the shift register of the third slave 320(3) will contain DATA3_1. Also, at time t7, each slave 320 will determine that there have been 48 SCLK cycles since time t4, when the slave 320 received the write-to-slave command with a local memory address. As such, each slave 320 will store the contents of its shift register into the memory location identified by its local memory pointer.

Although not explicitly shown in FIG. 10, at time t7, the processing of times t4 to t7 is repeated for the next memory locations within each slave. Thus, at time t7, the master 310 starts to transmit DATA3_2 to the first slave 320(1) followed by DATA2_2 and then by DATA1_2. As such, after the next set of 48 SCLK cycles, each slave 320 will again know that its shift register contains data to be stored. Each slave 320 increments its local memory pointer to store that data in its next memory location. This processing continues as long as the master 310 keeps CS_B low.

FIG. 10 represents the analogous processing performed by the slaves 320 for a last set of data (DATA3_n, DATA2_n, DATA1_n) from time t8 to time t11. At time t11, based on its local SCLK counter, the master 310 determines that the last set of data has been received and stored by the slaves 320 and drives CS_B high to terminate the burst-write operation.

Note that, during the single CS_B strobe of FIG. 10, from time t1 to time t4, the master 310 transmitted write commands to all of the slaves 320, and, from time t4 to time t11, each slave 320 received from the master 310 and stored multiple sets of data into contiguous local memory locations. Thus, multiple sets of data were written to the slaves 320 during a single burst-write network operation.

### Example Hybrid Burst-Read/Write Operation

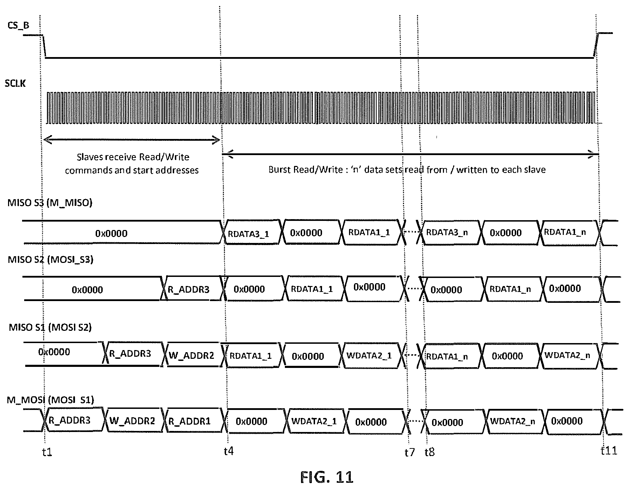

FIG. 11 is a timing diagram for an implementation of a hybrid burst-read/write operation in the network 300 of FIG. 3 having *N*=3 slaves 320. In this particular example, data is read from the first and third slaves 320(1) and 320(3) and written to the second slave 320(2) in a single burst operation. As such, the timing diagram of FIG. 11 is essentially a combination of the timing diagram of FIG. 9 for the first and third slaves 320(1) and 320(3) and the timing diagram of FIG. 10 for the second slave 320(2).

In particular, from time t1 to time t4, the master 310 transmits the read-from-slave commands R_ADDR1 and R_ADDR2 to the first and third slaves 320(1) and 320(3) and the write-to-slave command W_ADDR2 to the second slave 320(2).

At time t4, the three slaves 320 execute their respective commands. In particular, the first and third slaves 320(1) and 320(3) copy the first set of read data (*i.e*., RDATA1_1 and RDATA3_1, respectively) from their local memories into their shift registers, while the second slave 320(2) saves the local address location specified in the command W_ADDR2.

From time t4 to time t7, the slaves 320 transmit the read data RDATA1_1 and RDATA3_1 to the master 310, while the master 310 transmits the first set of write data WDATA2_1 to the second slave 320(2).

At time t7, the first and third slaves 320(1) and 320(3) copy the second set of read data (*i.e*., RDATA1_2 and RDATA3_2, respectively) from their local memories into their shift registers, while the second slave 320(2) stores the write data WDATA2_1 into it local memory and increments its local address pointer.

Starting from time t7, the process of reading data from the first and third slaves 320(1) and 320(3) and writing data to the second slave 320(2) is repeated until the end of the burst mode at time t11, at which time, the master 310 drives CS_B high.

### Example Bypass-Slave Operation

FIG. 12 is a timing diagram for an implementation of a bypass-slave operation in the network 300 of FIG. 3 having *N*=3 slaves 320 in which the master 310 instructs the second slave 320(2) to configure itself in bypass mode. During the bypass-slave operation, the master 310 transmits the bypass-slave command 0x8002, where the 0x8 value indicates that the message is a bypass-slave command [1000] as in FIG. 6 and the 0x002 value indicates that the second slave 320(2) is the intended slave for that command.

At time t1, the master 310 drives CS_B low and starts to transmit the bypass-slave command 0x8002 to the first slave 320(1). At time t2 (*i.e*., 16 SCLK cycles after time t1), the first slave 320(1) determines that the contents of its shift register are a bypass-slave command, but that it is not the intended slave for that command. As such, the first slave 320(1) does not execute that command.

At time t2, the first slave 320(1) starts to transmit the bypass-slave command 0x8002 to the second slave 320(2). At time t3 (*i.e*., 16 SCLK cycles after time t2), the second slave 320(2) determines that the content of its shift register is a bypass-slave command and that it is the intended slave for that command. As such, the second slave 320(2) will executed that command and configure itself in bypass mode.

In particular and referring again to FIG. 4, after determining that the shift register 402 contains the bypass-slave command 0x8002, the controller 410 in the second slave 320(2) instructs its bypass control logic 408 to set its mux control signal 409 high such that its mux 406 will directly forward subsequent incoming data signal 401 as the output data signal 407. As such, when in the bypass mode, each bit that the second slave 320(2) receives from the first slave 320(1) will immediately be transmitted to the third slave 320(3). In that case, the network 300 will operate as if the second slave 320(2) were not present.

Since the master 310 knows that the second slave 320(2) is the intended slave for the bypass-slave command, the master 310 knows that the second slave 320(2) will have received and processed the bypass-slave command by time t3. As such, at time t3, the master 310 drives SC_B high to end the bypass-slave operation.

Note that, although not represented in FIG. 12, the master 310 can transmit one or more additional bypass-slave commands to configure one or more other slaves 320 into bypass mode. This can be done in the same network operation (*i.e*., during the CS_B strobe of FIG. 12) or in different network operations (*i.e*., during different CS_B strobes).

Although not explicitly represented in FIG. 12, in order to function properly with the second slave 320(2) in bypass mode, at time t4, the master 310 again drives CS_B low and transmits the network-size command 0x6002 to update the slaves 320 as to the total number (*i.e*., now 2) of (non-bypassed) slaves 320 in the network 300. In that case, each slave 320, including the bypassed second slave 320(2), will update the value of its local parameter (NUM_SLAVES) for the total number of slaves in the network 300. This enables the network 300 to implement subsequent burst-read and/or burst-write operations with (i) the second slave 320(2) in bypass mode and (ii) the first and third slaves 320(1) and 320(3) executing read-from-slave and/or write-to-slave commands at (2x16) or 32-SCLK-cycle intervals, instead of at 48-SCLK-cycle intervals. In alternative scenarios, the master 310 could transmit the network-size command 0x6002 before or after the bypass-slave command 0x8002 during the same or different CS_B strobes.

Note that the slaves 320 will retain their previously determined network addresses such that, for example, the third slave 320(3) will continue to use the network address 3 as its location within the network 300. As described below, this enables the master 310 to transmit a targeted command to any slave 320, including the bypassed slave 320(2).

In alternative embodiments in which bypassed slaves 320 can be re-configured into the non-bypass mode only with a hard reset, the master 310 could re-transmit the address-assignment command 0x4000 in order to re-assign addresses, in which case the slave 320(3) would then have a new network address of 2.

Although the bypassed second slave 320(2) immediately transmits the incoming data signal 401 from the first slave 320(1) to the third slave 320(3), the incoming data signal 401 is also loaded into the shift register 402 of the bypassed second slave 320(2), and even though the second slave 320(2) is in bypass mode, the second slave 320(2) will continue to interpret the contents of its shift register 402 every 16 SCLK cycles. In this way, the master 310 can subsequently transmit and the second slave 320(2) will execute (32 SCLK cycles later) the soft-slave-reset command OxE002 to reconfigure itself back into the default, non-bypass mode (in which its mux control signal 409 again has a logic 0 value). The timing diagram for such a soft-slave-reset operation is analogous to the timing diagram of FIG. 12 for the bypass-slave operation.

### Example Single-Slave Operation

As described previously, the network 300 can be configured for single-slave operations in which the master 310 performs read and write operations with only a single, targeted slave 320. For example, to configure the network 300 for single-slave operations with the second slave 320(2), the master 310 can transmit the single-slave command 0xC002 using a timing diagram analogous to that of FIG. 12, followed by the network-size command 0x6001 using a timing diagram similar to that of FIG. 8. In response to the single-slave command 0xC002, each slave 320, except for the second slave 320(2), will configure itself into the bypass mode. In response to the network-size command 0x6001, each slave 320 will update its local network-size parameter NUM_SLAVES to have the value 1. The master 310 can then subsequently transmit appropriate read-from-slave and/or write-to-slave commands that will be executed by only the second slave 320(2) at (1x16) or 16-SCLK-cycle intervals.

In an alternative scenario, the master 310 can transmit two appropriate bypass-slave commands to the first and third slaves 320(1) and 320(3) to configure the network 300 for single-slave operations with the second slave 320(2). Here, too, though, the master 310 will transmit the network-size command 0x6001 for subsequent, efficient read and/or write operations with the second slave 320(2).

The master 310 can subsequently transmit and all of the slaves 320 will sequentially execute the soft-network-reset command 0xF000 to reconfigure each slave 320 into its default, non-bypass mode using a timing diagram analogous to that of FIG. 8. Alternatively, the master 310 could transmit soft-slave-reset commands to the first and third slaves 320(1) and 320(3). In either case, the master 310 would also transmit the network-size command 0x6003 (either before or after the reset command(s) during the same or different network operations) to instruct each slave 320 to update its local network-size parameter NUM_SLAVES to again have the value 3.

### Advantages

The inventive SPI network 300 of FIG. 3 may provide one or more advantages over the conventional SPI network 100 of FIG. 1. One potential advantage is that the inventive network 300 is capable of reading and/or writing multiple sets of data in burst mode during a single CS_B strobe. This capability enables the inventive network 300 to perform read and write operations more efficiently than the conventional network 100. For example, assuming that the networks 100 and 300 each have three slaves, the SCLK clock frequency is 10MHz, the CS_B minimum high time is 1us, and the message length is 16 bits, the conventional network 100 can perform 100 writes per slave in 1064usec vs. only 485usec for the inventive network 300, for a 54% improvement. For 100 reads per slave, the conventional network 100 takes 590us vs. only 485us for the inventive network 300, for an 18% improvement.

Another potential advantage is the ability of the inventive network 300 to configure any one or more slaves 320 into bypass mode, so that burst operations can be performed even if one or more of the slaves are faulty. This can be very useful in complying with certain industry standards, such as the ISO 26262 Automotive Safety Integrity Level (ASIL) requirements for data integrity, as well as in the debugging and isolation of faulty nodes during factory product development as well as continuous quality improvement (CQI) evaluation.

Another potential advantage is the ability of the master 310 to communicate efficiently with only a single slave 320 by configuring all of the other slaves 320 into bypass mode.

Another potential advantage is the ability of the network 300 to determine on the fly the number of slaves 320 in the system and also assign positional addresses to the slaves 320. This can be very useful in building scalable and flexible systems with reusable (master, slave) components. Positional address provides high detectability of data masquerading from one slave to another in a daisy-chain network and thus helps in building reliable systems.

Although the invention has been described in the context of SPI daisy-chain networks, the invention could also be implemented in the context of non-SPI daisy-chain networks. For example, the invention can alternatively be implemented in the context of a daisy-chain network that supports a chip select (CS) signal that is active high instead of active low as in the CS_B signal of the network 300 of FIG. 3. In such alternative network, a single CS strobe would correspond to the time that the CS signal is driven high until the time that the CS signal is next driven low.

Although the invention is described herein with reference to specific embodiments, various modifications and changes can be made without departing from the scope of the present invention as set forth in the claims below. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

It should be understood that the steps of the exemplary methods set forth herein are not necessarily required to be performed in the order described, and the order of the steps of such methods should be understood to be merely exemplary. Likewise, additional steps may be included in such methods, and certain steps may be omitted or combined, in methods consistent with various embodiments of the invention.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the invention. The appearances of the phrase "in one embodiment" in various places in the specification are not necessarily all referring to the same embodiment, nor are separate or alternative embodiments necessarily mutually exclusive of other embodiments. The same applies to the term "implementation."

## Claims

1. A node for a network comprising a master and a plurality of slaves connected in a daisy-chain configuration, wherein:
the node is one of the master or one of the slaves;
the master transmits a chip select (CS) signal that selectively enables the slaves to perform network operations; and
the master controls multiple slaves to operate in a burst mode in which each of the multiple slaves reads or writes multiple sets of data within a single CS strobe.

2. The node of claim 1, wherein the node is the master.

3. The node of claim 1, wherein the node is one of the slaves of the plurality of slaves.

4. The node of claim 3, wherein the slave comprises:
a chip select port that receives the CS signal from the master;
a clock port that receives a clock signal from the master;
a data input port that receives incoming data from an immediate upstream node in the network;
a data output port that transmits outgoing data to an immediate downstream node in the network;
a shift register (SR) that receives the incoming data from the data input port and outputs SR output data;
a multiplexer (MUX) having a first MUX input port that receives the SR output data from the shift register, a second MUX input port that receives the incoming data from the data input port, a MUX output port that transmits MUX output data to the data output port, and a MUX control port that receives a MUX control signal that selectively instructs the MUX to output (i) the SR output data at the first MUX input port as the MUX output data or (ii) the incoming data at the second MUX input port as the MUX output data; and
a controller that generates the MUX control signal.

5. The node of claim 4, wherein:
when the slave executes a bypass-slave command or a single-slave command, the controller generates the MUX control signal to instruct the MUX to output the incoming data at the second MUX input port as the MUX output data; and
when the slave executes a soft-slave-reset command or a soft-network-reset command, the controller generates the MUX control signal to instruct the MUX to output the SR output data at the first MUX input port as the MUX output data.

6. The node of claim 3, wherein:
the slave has a shift register (SR) that sequentially receives individual network messages of a known message size from an immediate upstream node in the network at time intervals based on the message size; and
the slave interprets each network message in its shift register at each time interval during each CS strobe to determine whether or not the network message is a command to be executed.

7. The node of claim 3, wherein:
the slave has a shift register (SR) that sequentially receives individual network messages from an immediate upstream node in the network; and
when the master terminates a CS strobe, the slave does not interpret or execute a network message in its shift register.

8. The node of any preceding claim, wherein:
the master and the slaves each store a NUM_SLAVES value for a total number of slaves in the network; and
each slave uses the NUM_SLAVES value to determine when to execute a burst-mode command.

9. The node of claim 8, wherein:
the master and the slaves have no *a priori* knowledge of the total number of slaves in the network;
prior to the burst mode, the master transmits an address-assignment command to the first slave in the network;
each slave executes the address-assignment command by (i) incrementing a received network address for an immediate upstream node in the network to determine its own network address and (ii) transmitting its own network address to an immediate downstream node in the network;
the master sets the NUM_SLAVES value to be equal to the network address of the last slave in the network; and
the master transmits a network-size command to inform each slave of the NUM_SLAVES value.

10. The node of any preceding claim, wherein:
the master instructs at least one slave to be configured in bypass mode, while one or more remaining slaves remain in non-bypass mode; and
the master then instructs the one or more remaining slaves to perform burst-mode operations while the at least one slave is in the bypass mode.

11. The node of any of claims 1 to 9, wherein:
the master instructs all but one slave to be configured in bypass mode, while the one slave remains in non-bypass mode; and
the master then instructs the one slave to perform read/write operations while the other slaves are in the bypass mode.

12. The node of claim 10 or 11, wherein the master then respectfully either instructs the at least one slave to be re-configured in the non-bypass mode, or instructs all of the bypassed slaves to be configured in the non-bypass mode.

13. The node of any preceding claim, wherein, at every clock cycle during each CS strobe, each node in the network transmits a data bit to the immediate downstream node in the network.

14. The node of any preceding claim, wherein the network is a serial peripheral interface (SPI) network.

15. A network comprising a master and a plurality of slaves connected in a daisy-chain configuration, wherein:
the master transmits a chip select (CS) signal that selectively enables the slaves to perform network operations; and
the master controls multiple slaves to operate in a burst mode in which each of the multiple slaves reads or writes multiple sets of data within a single CS strobe.
